# EUROPÄISCHE PATENTSCHRIFT

(11) **EP 3 394 414 B1**
(45) Veröffentlichungstag und Bekanntmachung des Hinweises auf die Patenterteilung: **07.10.2020**
(21) Anmeldenummer: 16801236.7
(22) Anmeldetag: 24.11.2016
(51) Int. Cl.: F02D 41/34, F02D 41/24

(54) **VERFAHREN ZUR ERMITTLUNG DES EINSPRITZBEGINN-ZEITPUNKTES UND DER EINSPRITZMENGE DES KRAFTSTOFFES IM NORMALBETRIEB EINES VERBRENNUNGSMOTORS**
METHOD FOR DETERMINING THE INJECTION START TIME AND THE INJECTION AMOUNT OF THE FUEL DURING NORMAL OPERATION OF AN INTERNAL COMBUSTION ENGINE
PROCÉDÉ POUR DÉTERMINER LE POINT DE DÉBUT D'INJECTION ET LA QUANTITÉ DE CARBURANT INJECTÉE PENDANT LE FONCTIONNEMENT NORMAL D'UN MOTEUR À COMBUSTION INTERNE

(30) Priorität: 22.12.2015 DE 102015226461
(43) Veröffentlichungstag der Anmeldung: 31.10.2018
(73) Patentinhaber: Vitesco Technologies GmbH, 30165 Hannover (DE)
(72) Erfinder: BRAUN, Tobias, 93152 Undorf (DE); KAINZ, Josef, 94330 Salching (DE)
(74) Vertreter: Waldmann, Georg Alexander
(86) Internationale Anmeldenummer: PCT/EP2016/078738
(87) Internationale Veröffentlichungsnummer: WO 2017/108323

(56) Entgegenhaltungen:
- EP-A1- 0 621 405
- DE-A1- 19 958 932
- JP-A- H09 112 320
- KR-A- 20040 057 443
- US-A1- 2003 062 028
- US-A1- 2005 098 146

## Beschreibung

Die vorliegende Erfindung betrifft ein Verfahren zur Ermittlung des Einspritzbeginn-Zeitpunktes und der Einspritzmenge des Kraftstoffes eines Verbrennungsmotors aus dem Saugrohrdrucksignal während des Normalbetriebs des Verbrennungsmotors.

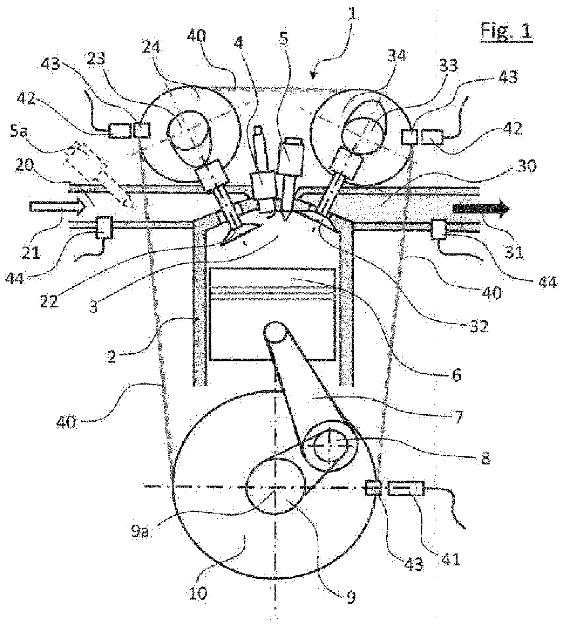

Hubkolben-Verbrennungsmotoren, die in diesem Zusammenhang und im Folgenden verkürzt auch nur als Verbrennungsmotoren bezeichnet werden, weisen ein oder mehrere Zylinder auf in denen jeweils ein Hubkolben angeordnet ist. Zur Veranschaulichung des Prinzips eines Hubkolben-Verbrennungsmotors wird im Folgenden Bezug auf Figur 1 genommen, die beispielhaft einen Zylinder eines ggf. auch mehrzylindrigen Verbrennungsmotors mit den wichtigsten Funktionseinheiten darstellt.

Der jeweilige Hubkolben 6 ist linear beweglich im jeweiligen Zylinder 2 angeordnet und schließt mit dem Zylinder 2 einen Brennraum 3 ein. Der jeweilige Hubkolben 6 ist über ein sogenanntes Pleuel 7 mit einem jeweiligen Hubzapfen 8 einer Kurbelwelle 9 verbunden, wobei der Hubzapfen 8 exzentrisch zur Kurbelwellendrehachse 9a angeordnet ist. Durch die Verbrennung eines Kraftstoff-Luft-Gemisches im Brennraum 3 wird der Hubkolben 6 linear "abwärts" angetrieben. Die translatorische Hubbewegung des Hubkolbens 6 wird mittels Pleuel 7 und Hubzapfen 8 auf die Kurbelwelle 9 übertragen und in eine Rotationsbewegung der Kurbelwelle 9 umgesetzt, die den Hubkolben 6 aufgrund ihrer Massenträgheit, nach Überwindung eines unteren Totpunktes im Zylinder 2 wieder in Gegenrichtung "aufwärts" bis zu einem oberen Totpunkt bewegt. Um einen kontinuierlichen Betrieb des Verbrennungsmotors 1 zu ermöglichen, muss während eines sogenannten Arbeitsspiels eines Zylinders 2 zunächst der Brennraum 3 mit dem Kraftstoff-Luft-Gemisch befüllt, das Kraftstoff-Luft-Gemisch im Brennraum 3 verdichtet, dann gezündet (im Falle eines Benzin-Verbrennungsmotors mittels Zündkerze und im Falle eines Diesel-Verbrennungsmotors durch Selbstentzündung) und zum Antrieb des Hubkolbens 6 verbrannt werden und schließlich das nach der Verbrennung verbleibende Abgas aus dem Brennraum 3 ausgeschoben werden. Durch kontinuierliche Wiederholung dieses Ablaufs ergibt sich ein kontinuierlicher Betrieb des Verbrennungsmotors 1 unter Abgabe einer zur Verbrennungsenergie proportionalen Arbeit.

Je nach Motorkonzept ist ein Arbeitsspiel des Zylinders 2 in zwei über eine Kurbelwellenumdrehung (360°) verteilte Takte (Zweitaktmotor) oder in vier über zwei Kurbelwellenumdrehungen (720°) verteilte Takte (Viertaktmotor) gegliedert.

Als Antrieb für Kraftfahrzeuge hat sich bis heute der Viertaktmotor durchgesetzt. In einem Ansaugtakt wird, bei Abwärtsbewegung des Hubkolbens 6, Kraftstoff-Luft-Gemisch 21 (bei Saugrohreinspritzung mittels Einspritzventil 5a, in Fig. 1 als Alternative gestrichelt dargestellt) oder auch nur Frischluft (bei Kraftstoff-Direkteinspritzung mittels Einspritzventil 5) aus dem Ansaugtrakt 20 in den Brennraum 3 eingebracht. Im folgenden Verdichtungstakt wird, bei Aufwärtsbewegung des Hubkolbens 6, das Kraftstoff-Luft-Gemisch oder die Frischluft im Brennraum 3 verdichtet sowie ggf. separat Kraftstoff mittels eines Einspritzventils 5 eingespritzt. Im folgenden Arbeitstakt wird das Kraftstoff-Luft-Gemisch, zum Beispiel beim Benzin-Verbrennungsmotor mittels einer Zündkerze 4, gezündet, verbrannt und bei Abwärtsbewegung des Hubkolbens 6 unter Abgabe von Arbeit entspannt. Schließlich wird in einem Ausschiebetakt, bei erneuter Aufwärtsbewegung des Hubkolbens 6, das verbleibende Abgas 31 aus dem Brennraum 3 in den Abgastrakt 30 ausgeschoben.

Die Abgrenzung des Brennraumes 3 zum Ansaugtrakt 20 oder Abgastrakt 30 des Verbrennungsmotors 1 erfolgt in der Regel und insbesondere bei dem hier zugrungegelegten Beispiel über Einlassventile 22 und Auslassventile 32. Die Ansteuerung dieser Ventile erfolgt nach heutigem Stand der Technik über mindestens eine Nockenwelle. Das gezeigte Beispiel verfügt über eine Einlassnockenwelle 23 zur Betätigung der Einlassventile 22 und über eine Auslassnockenwelle 33 zur Betätigung der Auslassventile 32. Zwischen den Ventilen und der jeweiligen Nockenwelle sind zumeist noch weitere, hier nicht dargestellte, mechanische Bauteile zur Kraftübertragung vorhanden, die auch einen Ventilspielausgleich beinhalten können (z.B. Tassenstößel, Kipphebel, Schlepphebel, Stößelstange, Hydrostößel etc.).

Der Antrieb der Einlassnockenwelle 23 und der Auslassnockenwelle 33 erfolgt über den Verbrennungsmotor 1 selbst. Hierzu werden die Einlassnockenwelle 23 und der Auslassnockenwelle 33 jeweils über geeignete Einlassnockenwellen-Steueradapter 24 und Auslassnockenwellen-Steueradapter 34, wie zum Beispiel Zahnräder, Kettenräder oder Riemenräder mithilfe eines Steuergetriebes 40, das zum Beispiel ein Zahnradgetriebe, eine Steuerkette oder einen Steuerzahnriemen aufweist, in vorgegebener Lage zueinander und zur Kurbelwelle 9 über einen entsprechenden Kurbelwellen-Steueradapter 10, der entsprechend als Zahnrad, Kettenrad oder Riemenrad ausgebildet ist, mit der Kurbelwelle 9 gekoppelt. Durch diese Verbindung ist die Drehlage der Einlassnockenwelle 23 und der Auslassnockenwelle 33 in Relation zur Drehlage der Kurbelwelle 9 prinzipiell definiert. In Figur 1 ist beispielhaft die Kopplung zwischen Einlassnockenwelle 23 und der Auslassnockenwelle 33 und der Kurbelwelle 9 mittels Riemenscheiben und Steuerzahnriemen dargestellt.

Der über ein Arbeitsspiel zurückgelegte Drehwinkel der Kurbelwelle wird im Weiteren als Arbeitsphase oder einfach nur Phase bezeichnet. Ein innerhalb einer Arbeitsphase zurückgelegter Drehwinkel der Kurbelwelle wird dem entsprechend als Phasenwinkel bezeichnet. Der jeweils aktuelle Kurbelwellen-Phasenwinkel der Kurbelwelle 9 kann mittels eines mit der Kurbelwelle 9 oder dem Kurbelwellen-Steueradapter 10 verbundenen Lagegebers 43 und einem zugeordneten Kurbelwellen-Lagesensor 41 laufend erfasst werden. Dabei kann der Lagegeber 43 zum Beispiel als Zähnerad mit einer Mehrzahl von äquidistant über den Umfang verteilt angeordneten Zähnen ausgeführt sein, wobei die Anzahl der einzelnen Zähne die Auflösung des Kurbelwellen-Phasenwinkelsignals bestimmt.

Ebenso können ggf. zusätzlich die aktuellen Phasenwinkel der Einlassnockenwelle 23 und der Auslassnockenwelle 33 mittels entsprechender Lagegeber 43 und zugeordneter Nockenwellenlagesensoren 42 laufend erfasst werden.

Da sich der jeweilige Hubzapfen 8 und mit ihm der Hubkolben 6, die Einlassnockenwelle 23 und mit ihr das jeweilige Einlassventil 22 sowie die Auslassnockenwelle 33 und mit ihr das jeweilige Auslassventil 32 durch die vorgegebene mechanische Kopplung in vorgegebener Relation zueinander und in Abhängigkeit von der Kurbelwellendrehung bewegen, durchlaufen diese Funktionskomponenten synchron zur Kurbelwelle die jeweilige Arbeitsphase. Die jeweiligen Drehlagen und Hubpositionen von Hubkolben 6, Einlassventilen 22 und Auslassventilen 32 können so, unter Berücksichtigung der jeweiligen Übersetzungsverhältnisse, auf den durch den Kurbelwellen-Lagesensor 41 vorgegebenen Kurbelwellen-Phasenwinkel der Kurbelwelle 9 bezogen werden. Bei einem idealen Verbrennungsmotor ist somit jedem bestimmten Kurbelwellen-Phasenwinkel ein bestimmter Hubzapfenwinkel, ein bestimmter Kolbenhub, ein bestimmter Einlassnockenwellenwinkel und somit ein bestimmter Einlassventilhub sowie ein bestimmter Auslassnockenwellenwinkel und somit ein bestimmter Auslassventilhub zuordenbar. Das heißt alle genannten Komponenten befinden sich bzw. bewegen sich in Phase mit der sich drehenden Kurbelwelle 9.

Bei modernen Verbrennungsmotoren 1 können innerhalb der mechanischen Koppelstrecke zwischen Kurbelwelle 9 und Einlassnockenwelle 23 sowie der Auslassnockenwelle 33 jedoch zusätzliche Stellglieder vorhanden sein, zum Beispiel integriert in den Einlassnockenwellenadapter 24 und den Auslassnockenwellenadapter 34, die einen gewünschten steuerbaren Phasenversatz zwischen der Kurbelwelle 9 und Einlassnockenwelle 23 sowie der Auslassnockenwelle 33 bewirken. Diese sind als sogenannte Phasensteller bei sogenannten variablen Ventiltrieben bekannt.

Für einen optimalen Betrieb des Verbrennungsmotors (bezüglich Emissionen, Verbrauch, Leistung, Laufruhe etc.) sollten alle für eine effiziente Verbrennung des Kraftstoffes relevanten Betriebsgrößen möglichst genau vorgegeben und eingehalten werden.

Stand der Technik zur Bestimmung der Betriebsgrößen sind die Vermessung eines sogenannten Referenz-Verbrennungsmotors in allen auftretenden Betriebszuständen (Drehzahl, Last, Ansteuerung sämtlicher Aktuatoren, unterschiedliche Ventilhübe, Ansteuerung von Klappen, Ansteuerung der Phasensteller für Einlass- und Auslassventil, Abgasturbolader, Kompressor etc.) und die Speicherung dieser Messwerte (bzw. Derivate davon oder Modellansätze, die das Verhalten wiedergeben) in entsprechenden Kennfeldern auf dem Motorsteuergerät eines entsprechenden Serien-Verbrennungsmotors. Alle baugleichen, in Serie produzierten Verbrennungsmotoren der gleichen Baureihe werden mit diesem erzeugten Referenzdatensatz betrieben. In erster Näherung können somit die Betriebsgrößen als bekannt angenommen werden.

Aufgrund von Bauteiltoleranzen, Verschleißerscheinungen oder Umgebungseinflüssen treten jedoch im bestimmungsgemäßen Betrieb eines Serien-Verbrennungsmotors Abweichungen der tatsächlichen Betriebsgrößen von den aufgrund des Referenzdatensatzes angestrebten Betriebsgrößen auf. Um diesen Abweichungen der Betriebsgrößen entgegen zu wirken, ist es erforderlich zunächst die tatsächlichen Betriebsgrößen zu erfassen und dann Anpassungen im Referenzdatensatz oder in der Ansteuerung vorzunehmen im Sinne einer Korrektur bzw. Annäherung der tatsächlichen Betriebsgrößen hin zu den gewünschten Vorgabewerten.

Zwei wichtige Betriebsgrößen, die es hierbei zu beachten gilt sind der Einspritzbeginn-Zeitpunkt und die erzielte Einspritzmenge des Kraftstoffes.

Aufgrund von Toleranzen im eigentlichen Einspritzventil (z.B. mechanische Fertigungstoleranzen) oder in dessen elektrischer Ansteuerung können Abweichungen zwischen gewünschter und tatsächlicher Einspritzmenge des Kraftstoffs auftreten. Weiterhin können Abweichungen zwischen dem gewünschten und dem tatsächlichen Einspritzbeginn-Zeitpunkt der Einspritzung auftreten. Eine Mengenabweichung führt zu einer Verschlechterung der Rohemissionen des Abgases und damit ggf. zu einer Emissionsverschlechterung des Gesamtsystems. Eine ungewollte Verschiebung des Einspritzbeginn-Zeitpunkts kann wegen der Verschlechterung der Gemischaufbereitung ebenfalls zu einer Verschlechterung der Emissionen führen.

Daher ist es das Bestreben, die tatsächlichen Einspritzmengen und den Einspritzbeginn-Zeitpunkt möglichst genau zu erfassen, auftretende Abweichungen von den Sollwerten (z.B. aufgrund von Toleranzen) zu erkennen und korrigierend über die Anpassung der Ansteuerung einzuwirken. Aufgrund immer höherer Einspritzdrücke, komplexerer Einspritzventile und immer strengerer Emissionsanforderungen erlangt dieses Thema stetig wachsende Bedeutung.

Im Falle der Einspritzmenge und des Einspritzbeginn-Zeitpunktes ist jedoch schon eine direkte Erfassung/Messung der aktuellen Betriebsgrößen nicht möglich oder nur über Umwege zu ermitteln. Im Stand der Technik werden dazu Verfahren vorgeschlagen, die eine Ermittlung der Einspritzmenge zum Beispiel auf Basis des Druckabfalls in der Kraftstoffversorgung oder auf Basis von dynamischen Drehmomentschwankungen oder Aufgrund von mit einer Lambda-Sonde gemessenen Messwerten vornehmen.

Aus dem Dokument US 2003/062028A1 ist eine elektronische Steuerungsvorrichtung, zur Steuerung der mittels eines Injektors in das Ansaugrohr des Verbrennungsmotors eingespritzten Kraftstoff-Einspritzmenge, bekannt. Diese Vorrichtung ist dazu eingerichtet auf Basis des Ansaugrohrdruckes eine Ansaugluftmenge und eine Drehgeschwindigkeit des Verbrennungsmotors arithmetisch zu ermitteln und auf Basis der ermittelten Ansaugluftmenge eine Basis-Einspritzzeit zur Dosierung einer Kraftstoff-Einspritzmenge zu berechnen. Zusätzlich erfolgt eine Korrektur der Basis-Einspritzzeit mit Hilfe einer Korrektur-Variablen. Weiterhin wird für jede bevorstehende Einspritzung ein Last-Parameter mit Hilfe eines gespeicherten Kennfeldes, in Abhängigkeit von einem auftretenden Lastwechsel, einem Drosselklappen-Öffnungswinkel und der Drehgeschwindigkeit des Verbrennungsmotors ermittelt und mit Hilfe des vorausgehend ermittelten Last-Parameters eine Last-Parameter-Abweichung, also ein transienter Betriebszustand, errechnet. Überschreitet die ermittelte Last-Parameter-Abweichung einen vorgegebenen Wert, wird die zuvor ermittelte Korrektur-Variable angepasst und die Einspritzzeit, und somit die Kraftstoff-Einspritzmenge der aktuell bevorstehenden Kraftstoff-Einspritzung, wird unter Anwendung der angepassten Korrektur-Variablen vorgegeben.

Weiterhin ist aus dem Dokument US 6 804 997 B1 ein Verfahren zur Ermittlung einer Kurbelwellenposition und der Phase eines Verbrennungsmotors bekannt, das auf der Messung und Beobachtung von Druckschwankungen im Ansaugtrakt des Verbrennungsmotors beruht.

Zur Bestimmung der Einspritzbeginn-Zeitpunkte werden zum Beispiel Verfahren vorgeschlagen, die den Einspritzbeginn-Zeitpunkt anhand von Rückmessungen des Strom- oder Spannungssignals an einem elektrisch angetriebenen Injektor und eine Analyse des gemessenen Signals ermitteln.

Diese Verfahren sind aufgrund der langen Wirkungsketten jedoch sehr aufwendig, fehleranfällig und ungenau.

Daher ist es die der Erfindung zugrunde liegende Aufgabe, ein Verfahren anzugeben, mit dem, möglichst ohne zusätzliche Sensoranordnung und vorrichtungstechnischen Aufwand, die Einspritzmenge und den Einspritzbeginn-Zeitpunkt möglichst genau erfasst werden können, um entsprechende Anpassungen der Betriebsparameter zur Optimierung des laufenden Betriebs zu ermöglichen.

Diese Aufgabe wird gelöst durch das erfindungsgemäße Verfahren zur Ermittlung des Einspritzbeginn-Zeitpunktes und der Einspritzmenge des Kraftstoffes im Normalbetrieb eines Verbrennungsmotors, gemäß Hauptanspruch. Fortbildungen und Ausführungsbeispiele des erfindungsgemäßen Verfahrens sind Gegenstand der abhängigen Ansprüche.

Erfindungsgemäß werden bei Durchführung des Verfahrens einem Zylinder des Verbrennungsmotors zuordenbare dynamische Druckschwingungen im Einlasstrakt des betreffenden Verbrennungsmotors, an einem definierten Betriebspunkt bei saugsynchroner Kraftstoffeinspritzung, im Normalbetrieb gemessen und daraus wird ein entsprechendes Druckschwingungssignal erzeugt. Gleichzeitig wird ein Kurbelwellen-Phasenwinkelsignal ermittelt.

Ein Referenz-Basis-Druckschwingungssignal ist bereitgestellt, wobei zu dessen Bereitstellung die einem Zylinder zuordenbaren dynamischen Druckschwingungen im Einlasstrakt ohne Kraftstoffeinspritzung oder bei direkter Kraftstoffeinspritzung in den geschlossenen Brennraum in Abhängigkeit vom Kurbelwellen-Phasenwinkel gemessen werden und daraus das Referenz-Basis-Druckschwingungssignal erzeugt und gespeichert wird.

Aus dem Druckschwingungssignal wird durch Abzug des Referenz-Basis-Druckschwingungssignals der durch die Kraftstoffeinspritzung verursachte Einspritz-Signalanteil errechnet und darauf basierend wird die Signal-Phasenlage und die Signal-Amplitude des Einspritz-Signalanteils in Bezug auf das Kurbelwellen-Phasenwinkelsignal ermittelt.

Nachfolgend werden dann der Einspritzbeginn-Zeitpunkt auf Basis der ermittelten Signal-Phasenlage des Einspritz-Signalanteils unter Heranziehung von Referenz-Phasenlagen und die Einspritzmenge auf Basis der ermittelten Signal-Amplitude des Einspritz-Signalanteils unter Heranziehung von Referenz-Amplituden ermittelt.

Zur Erläuterung der Funktionsweise eines der Erfindung zugrundeliegenden Verbrennungsmotors (siehe oben) sowie der Signalverläufe des Druckschwingungssignals als Grundlage der Funktionsweise des erfindungsgemäßen Verfahrens, wird auf die Figuren Bezug genommen. Es zeigt:
- Figur 1: eine vereinfachte Darstellung eines hier verkürzt als Verbrennungsmotor bezeichneten Hubkolben-Verbrennungsmotors mit den wichtigsten Funktionskomponenten;
- Figur 2: ein Diagramm zur Darstellung der Verläufe der Signalanteile des Druckschwingungssignals;

Die Erfindung beruht auf der Erkenntnis, dass, unter der Voraussetzung einer saugsynchronen Kraftstoffeinspritzung, zwischen dem Verlauf des Saugrohr-Druckschwingungssignals und dem Einspritzbeginn-Zeitpunkt sowie der Einspritzmenge des Kraftstoffes im Einlasstrakt des Verbrennungsmotors ein eindeutiger Zusammenhang besteht.

Gemäß dem erfindungsgemäßen Verfahren werden die einem Zylinder des Verbrennungsmotors zuordenbaren dynamische Druckschwingungen im Einlasstrakt des betreffenden Verbrennungsmotors, an einem definierten Betriebspunkt zunächst bei saugsynchroner Kraftstoffeinspritzung, im Normalbetrieb gemessen und daraus ein entsprechendes Druckschwingungssignal erzeugt. Gleichzeitig wird, sozusagen als Referenz- oder Bezugs-Signal, ein Kurbelwellen-Phasenwinkelsignal des Verbrennungsmotors ermittelt.

Ein möglicher Betriebspunkt wäre zum Beispiel der Leerlaufbetrieb bei vorgegebener Drehzahl. Unter saugsynchroner Einspritzung ist dabei eine Einspritzung in einem Zeitraum zu verstehen, während dessen bei geöffnetem Einlassventil Frischgas in den Brennraum zugeführt wird. Dies kann durch Einspritzung des Kraftstoffes in das Saugrohr oder direkt in den Brennraum des jeweiligen Zylinders bei gleichzeitig geöffnetem Einlassventil erfolgen. Der Normalbetrieb kennzeichnet den bestimmungsmäßigen Betrieb des Verbrennungsmotors, beispielsweise in einem Kraftfahrzeug, wobei der Verbrennungsmotor ein Exemplar einer Serie von baugleichen Verbrennungsmotoren ist. Eine weitere gebräuchliche Bezeichnung für einen Solchen Verbrennungsmotor, die auch in diesem Zusammenhang entsprechend verwendet wird ist Serien-Verbrennungsmotor.

Der Druckschwingungsverlauf kann durch einen (in der Regel ohnehin vorhandenen) Drucksensor im Saugrohr des jeweiligen Serien-Verbrennungsmotors gemessen werden. Durch Vergleich des gemessenen Druckschwingungsverlaufs mit einem vorher an einem Referenz-Verbrennungsmotor ermittelten Referenz-Druckschwingungsverlauf (mit bekanntem Einspritzbeginn-Zeitpunkt und bekannter Einspritzmenge), können der aktuelle Einspritzbeginn-Zeitpunkt und die aktuelle Einspritzmenge am Serien-Verbrennungsmotor ermittelt werden.

Der Einfluss der Kraftstoffeinspritzung auf die dynamischen Druckschwingungen im Saugrohr beruht auf folgenden grundlegenden physikalischen Prozessen:
- Der eingespritzte Kraftstoff verdampft und entzieht dabei dem Frischgas die dafür notwendige Verdampfungswärme.
- Gleichzeit verdrängt der verdampfte Kraftstoff Luft. Der Abkühleffekt überwiegt jedoch die Verdrängung, so dass das im Brennraum bzw. Einlasskanal befindliche Gas ein im Vergleich zum Zustand ohne Kraftstoffeinspritzung reduziertes Volumen einnimmt.
- Als Folge kann weitere Luft aus dem Saugrohr nachströmen, was dort anfangs zu einer Druckreduzierung führt. Nachströmende Luft ins Saugrohr bewirkt schließlich wieder einen Druckanstieg.
- Diesem beschriebenen Effekt überlagert sind Druckschwingungen im Saugrohr, die durch die periodischen Ansaugvorgänge der verschiedenen Zylinder angeregt werden.

Ein im Betrieb im Saugrohr gemessenes Druckschwingungssignal besteht also aus einem von der Kraftstoffeinspritzung unabhängigen Anteil, der in diesem Zusammenhang als Basis-Druckschwingungssignal bezeichnet wird und einem durch die Kraftstoffeinspritzung verursachten Anteil, der in diesem Zusammenhang als Einspritz-Signalanteil bezeichnet wird. Der Einfluss der Einspritzparameter Einspritzbeginn-Zeitpunkt und Einspritzmenge zeigt sich also alleine im Verlauf des Einspritz-Signalanteils. Unter der Voraussetzung, dass das Basis-Druckschwingungssignal bekannt ist, kann der Einspritz-Signalanteil aus dem gemessenen Druckschwingungssignal durch Subtraktion des Basis-Druckschwingungssignals gewonnen und nun isoliert analysiert werden.

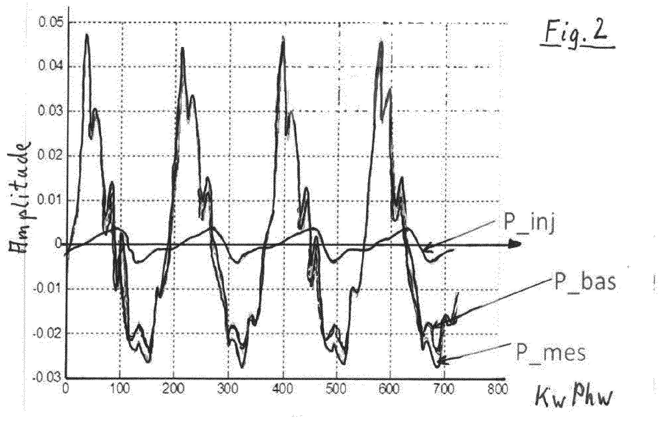

Dieser Zusammenhang ist in Figur 2 in einem Diagramm dargestellt. Aufgezeichnet ist das im Saugrohr gemessene Druckschwingungssignal P_mes sowie mit geringem Abstand dazu das Basis-Druckschwingungssignal P_bas. Weiterhin ist auch der durch subtraktion des Basis-Druckschwingungssignals P_bas vom Druckschwingungssignal P_mes gewonnene Einspritz-Signalanteil P_inj jeweils mit der Amplitude in Bezug auf den Kurbelwellen-Phasenwinkel KwPhw dargestellt

Dabei hat sich gezeigt, dass insbesondere die, im Weiteren als Signal-Phasenlage bezeichnete, Phasenlage des Einspritz-Signalanteils P_inj in Bezug auf den Kurbelwellen-Phasenwinkel in Abhängigkeit steht vom Einspritzbeginn-Zeitpunkt und die, im Weiteren als Signal-Amplitude bezeichnete, Amplitude des Einspritz-Signalanteils P_inj in Abhängigkeit steht von der Einspritzmenge des Kraftstoffes.

Zur Analyse des Einspritz-Signalanteils in Bezug auf die Phasenlage und die Amplitude, kann dieser einer Diskreten Fourier-Transformation (DFT) unterzogen werden. Dazu kann ein als Fast Fourier-Transformation (FFT) bekannter Algorithmus zur effizienten Berechnung der DFT herangezogen werden. Mittels DFT wird nun der Einspritz-Signalanteil in einzelne Signalfrequenzen zerlegt, die im Weiteren separat vereinfacht bezüglich ihrer Amplitude und der Phasenlage analysiert werden können.

Vorteilhaft werden dazu nur diejenigen Signalfrequenzen herangezogen, die der Ansaugfrequenz, als Grundfrequenz oder 1. Harmonische, des Verbrennungsmotors oder einem Vielfachen der Ansaugfrequenz, also der 2. bis n. Harmonischen, entsprechen, wobei die Ansaugfrequenz wiederum in eindeutigem Zusammenhang mit der Drehzahl des Verbrennungsmotors steht. Für zumindest eine ausgesuchte Signalfrequenz wird dann, unter Heranziehung des parallel erfassten Kurbelwellen-Phasenwinkelsignals, die Phasenlage und die Amplitude dieser ausgesuchten Signalfrequenzen in Bezug auf den Kurbelwellen-Phasenwinkel ermittelt.

Auf Basis der ermittelten Signal-Phasenlage wird dann unter Heranziehung von Referenz-Phasenlagen der Einspritzbeginn-Zeitpunkt ermittelt. Dazu sind zuvor an einem baugleichen Referenz-Verbrennungsmotor ermittelte Referenz-Phasenlagen mit zugeordneten Einspritzbeginn-Zeitpunkten bereitgestellt. Über die mit der ermittelten Signal-Phasenlage übereinstimmende Referenz-Phasenlage kann dann auf den Einspritzbeginn-Zeitpunkt geschlossen werden.

Auf Basis der ermittelten Signal-Amplitude wird dann unter Heranziehung von Referenz-Amplituden die Einspritzmenge ermittelt. Dazu sind zuvor an einem baugleichen Referenz-Verbrennungsmotor ermittelte Referenz-Amplituden mit zugeordneten Einspritzmengen bereitgestellt. Über die mit der ermittelten Signal-Amplitude übereinstimmende Referenz-Amplitude kann dann auf die Einspritzmenge geschlossen werden.

Zur einfachen Durchführung des erfindungsgemäßen Verfahrens sind in einem Ausführungsbeispiel die zuvor an einem Referenz-Verbrennungsmotor der Serie baugleicher Verbrennungsmotoren ermittelten Referenz-Kennwerte, das Referenz-Basis-Druckschwingungssignal in Abhängigkeit vom Kurbelwellen-Phasenwinkel, die Referenz-Phasenlagen in Abhängigkeit vom Einspritzbeginn-Zeitpunkt und die Referenz-Amplituden in Abhängigkeit von der Einspritzmenge, in Referenzwert-Kennfeldern gespeichert und zur Verwendung in dem erfindungsgemäßen Verfahren bereitgestellt, aus denen sie zum Vergleich abgerufen werden können.

Die einfachste Form eines solchen Kennfeldes für die Referenz-Phasenlage besteht in einem Diagramm, das, für einen bestimmten Betriebspunkt des Verbrennungsmotors, die Abhängigkeit zwischen der Referenz-Phasenlage und dem jeweils zugehörigen Einspritzbeginn-Zeitpunkt in Form einer Referenz-Phasenlagen-Kurve abbildet.

Die einfachste Form eines solchen Kennfeldes für die Referenz-Amplituden besteht in einem Diagramm, das, für einen bestimmten Betriebspunkt des Verbrennungsmotors, die Abhängigkeit zwischen der Referenz-Amplitude und der jeweils zugehörigen Einspritzmenge in Form einer Referenz-Amplituden-Kurve abbildet.

Ein entsprechendes umfangreicheres Kennfeld kann beispielsweise entsprechende Referenz-Phasenlagen-Kurven bzw. Referenz-Amplituden-Kurven für unterschiedliche Betriebspunkte des Verbrennungsmotors enthalten.

Die Ermittlung des Einspritzbeginn-Zeitpunktes bzw. der Einspritzmenge kann in diesem Beispiel dann auf einfache Weise derart erfolgen, dass ausgehend von der im Normalbetrieb des Verbrennungsmotors ermittelten Signal-Phasenlage bzw. der ermittelten Signal-Amplitude der zugehörige Referenzpunkt auf der Referenz-Phasenlagen-Kurve bzw. auf der Referenz-Amplituden-Kurve ermittelt und ausgehend wiederum von diesem, der zugehörige Einspritzbeginn-Zeitpunkt bzw. die zugehörige Einspritzmenge ermittelt wird.

Eine weitere alternative Möglichkeit besteht darin, dass das Referenz-Basis-Druckschwingungssignal in Abhängigkeit vom Kurbelwellen-Phasenwinkel in einem Referenzwert-Kennfeld gespeichert bereitgestellt ist und, anstatt der weiteren Referenzwert-Kennfelder, entsprechende, die Referenz-Phasenlagen-Kurve bzw. die Referenz-Amplituden-Kurve charakterisierende Modell-Funktionen gespeichert bereitgestellt sind, wobei die Modell-Funktionen den Zusammenhang zwischen Referenz-Phasenlagen und Einspritzbeginn-Zeitpunkt sowie Referenz-Amplituden und Einspritzmenge abbilden. Unter Vorgabe der ermittelten Signal-Phasenlage bzw. der ermittelten Signal-Amplitude, kann damit dann der Einspritzbeginn-Zeitpunkt und die Einspritzmenge jeweils aktuell berechnet werden. Der Vorteil dieser Alternative liegt darin, dass insgesamt weniger Speicherkapazität zur Verfügung gestellt werden muss.

Bei der Durchführung des Verfahrens wird davon ausgegangen, dass das Referenz-Basis-Druckschwingungssignal, die Referenz-Phasenlagen für unterschiedliche Einspritzbeginn-Zeitpunkte und die Referenz-Amplituden für unterschiedliche Einspritzmengen zur Durchführung des Verfahrens zur Verfügung stehen.

Dazu werden in Erweiterung des erfindungsgemäßen Verfahrens das Referenz-Basis-Druckschwingungssignal in Abhängigkeit vom Kurbelwellen-Phasenwinkel, die Referenz-Phasenlagen in Abhängigkeit vom Einspritzbeginn-Zeitpunkt und die Referenz-Amplituden in Abhängigkeit von der Einspritzmenge dem Normalbetrieb vorausgehend an einem Referenz-Verbrennungsmotor ermittelt.

Der Referenz-Verbrennungsmotor ist dabei ein zu der entsprechenden Serie von Verbrennungsmotoren baugleicher Verbrennungsmotor, bei dem insbesondere sichergestellt ist, dass möglichst keine, das Verhalten beeinflussende, bauliche Toleranzabweichungen vorhanden sind. Dadurch soll gewährleistet werden, dass der Zusammenhang zwischen Einspritzbeginn-Zeitpunkt und Referenz-Phasenlage bzw. Einspritzmenge und Referenz-Amplitude möglichst genau und ohne Einfluss weiterer Störfaktoren ermittelt wird.

Die Ermittlung entsprechender Referenz-Phasenlagen bzw. Referenz-Amplituden kann mit Hilfe des Referenz-Verbrennungsmotors in unterschiedlichen Betriebspunkten und unter Vorgabe bzw. Variation weiterer Betriebsparameter, wie der Temperatur des angesaugten Mediums, der Kühlmitteltemperatur oder der Motordrehzahl erfolgen. Die so entstehenden Referenzwert-Kennfelder können dann vorteilhaft bei allen baugleichen Serien-Verbrennungsmotoren zur Verfügung gestellt, insbesondere in einem Speicherbereich einer dem Verbrennungsmotor zuordenbaren elektronischen Recheneinheit abgelegt werden.

In Fortführung der vorgenannten vorausgehenden Ermittlung der Referenz-Phasenlagen und Referenz-Amplituden kann aus den ermittelten Referenz-Phasenlagen bzw. den ermittelten Referenz-Amplituden und den zugeordneten Einspritzbeginn-Zeitpunkten bzw. Einspritzmengen, beispielsweise mittels entsprechender Polynom-Ansätze, jeweils eine Modell-Funktion hergeleitet werden, die zumindest den Zusammenhang zwischen den Referenz-Phasenlagen und den Einspritzbeginn-Zeitpunkten bzw. den Referenz-Amplituden und den Einspritzmengen abbildet.

Hierbei können optional auch zusätzliche Parameter, wie zum Beispiel die Temperatur des angesaugten Mediums im Ansaugtrakt, die Temperatur eines zur Kühlung des Verbrennungsmotors verwendeten Kühlmittels und die Motordrehzahl des Verbrennungsmotors mit einbezogen werden, die, wie im Weiteren noch erläutert werden soll, zur Steigerung der Genauigkeit des Verfahrens zusätzlich herangezogen werden können.

So entstehen jeweilige Modell-Funktionen mit denen unter Vorgabe der Signal-Phasenlage bzw. der Signal-Amplitude und ggf. unter Einbeziehung der oben genannten zusätzlichen Parameter der jeweilige Einspritzbeginn-Zeitpunkt und die Einspritzmenge aktuell berechnet werden können.

Die Modell-Funktionen können dann vorteilhaft bei allen baugleichen Serien-Verbrennungsmotoren zur Verfügung gestellt, insbesondere in einem Speicherbereich einer dem Verbrennungsmotor zuordenbaren elektronischen Recheneinheit abgelegt werden. Die Vorteile liegen darin, dass die Modell-Funktion weniger Speicherplatz benötigen als umfangreiche Referenzwert-Kennfelder.

Um in Weiterbildung des Verfahrens die Genauigkeit der Ermittlung des Einspritzbeginn-Zeitpunktes und der Einspritzmenge des Kraftstoffs weiter zu steigern, können zusätzliche Betriebsparameter des Verbrennungsmotors bei der Ermittlung herangezogen werden. Dazu kann zumindest einer der weiteren Betriebsparameter
- Temperatur des angesaugten Mediums im Ansaugtrakt,
- Temperatur eines zur Kühlung des Verbrennungsmotors verwendeten Kühlmittels und
- Motordrehzahl des Verbrennungsmotors,
bei der Ermittlung des Einspritzbeginn-Zeitpunktes und der Einspritzmenge herangezogen werden.

Die Temperatur des angesaugten Mediums, also im Wesentlichen der Ansaugluft, beeinflusst direkt die Schallgeschwindigkeit im Medium und somit die Druckausbreitung im Einlasstrakt. Diese Temperatur kann im Ansaugtrakt gemessen werden und ist somit bekannt.

Auch die Temperatur des Kühlmittels kann die Schallgeschwindigkeit im angesaugten Medium durch Wärmeübertragung im Einlasskanal und im Zylinder beeinflussen. Auch diese Temperatur wird in der Regel überwacht und dazu gemessen, steht also ohnedies bereit und kann bei der Ermittlung des Einspritzbeginn-Zeitpunktes und der Einspritzmenge herangezogen werden.

Die Motordrehzahl ist eine der den Betriebspunkt des Verbrennungsmotors charakterisierenden Größen und beeinflusst die verfügbare Zeit für die Druckausbreitung im Einlasskanal. Auch die Motordrehzahl wird ständig überwacht und steht somit bei der Ermittlung des Einspritzbeginn-Zeitpunktes und der Einspritzmenge zur Verfügung.

Die vorgenannten zusätzlichen Parameter stehen also ohnedies zur Verfügung oder können auf einfache Weise ermittelt werden. Der jeweilige Einfluss der genannten Parameter auf das Druckschwingungssignal wird dabei als bekannt vorausgesetzt und wurde beispielsweise bei der Vermessung eines Referenz-Verbrennungsmotors ermittelt und in den Referenzwert-Kennfeldern mit abgespeichert. Auch die Einbeziehung mittels entsprechender Korrekturfaktoren oder Korrekturfunktionen bei der Berechnung des Einspritzbeginn-Zeitpunktes und der Eispritzmenge mittels einer Modell-Funktion stellt eine Möglichkeit dar, diese zusätzlichen, weiteren Betriebsparameter bei der Ermittlung des Einspritzbeginn-Zeitpunktes und der Einspritzmenge zu berücksichtigen.

In einer vorteilhaft einsetzbaren Ausführung des erfindungsgemäßen Verfahrens erfolgt die Berechnung des durch die Kraftstoffeinspritzung verursachten Einspritz-Signalanteils sowie die Ermittlung der Signal-Phasenlage und der Signal-Amplitude des Einspritz-Signalanteils in Bezug auf das Kurbelwellen-Phasenwinkelsignal als auch die Ermittlung des Einspritzbeginn-Zeitpunktes und der Einspritzmenge des Kraftstoffes im Normalbetrieb eines Verbrennungsmotors mit Hilfe einer dem Verbrennungsmotor zugeordneten elektronischen Recheneinheit, beispielsweise der zentralen Motor-Steuereinheit (CPU) des Verbrennungsmotors, wobei das Referenz-Basis-Druckschwingungssignals sowie die Referenzwert-Kennfelder oder die Modell-Funktionen, in zumindest einem Speicherbereich der elektronischen Recheneinheit gespeichert sind. Auf diese Weise lässt sich das erfindungsgemäße Verfahren automatisch, sehr schnell und wiederkehrend im Betrieb des Serien-Verbrennungsmotors durchführen.

In einem Durchführungsbeispiel kann die vorausgehende Ermittlung des Referenz-Basis-Druckschwingungssignals sowie der Referenz-Phasenlagen und Referenz-Amplituden des Einspritz-Signalanteils durch die Vermessung eines Referenz-Verbrennungsmotors an zumindest einem definierten Betriebspunkt, in einem Messbetrieb erfolgen.

Dabei werden zur Ermittlung des Referenz-Basis-Druckschwingungssignals die einem Zylinder des Referenz-Verbrennungsmotors zuordenbaren dynamischen Druckschwingungen im Einlasstrakt, im Messbetrieb, ohne Kraftstoffeinspritzung oder bei direkter Kraftstoffeinspritzung in den geschlossenen Brennraum, in Bezug auf das Kurbelwellen-Phasenwinkelsignal gemessen und daraus ein entsprechendes Druckschwingungssignal erzeugt und als Referenz-Basis-Druckschwingungssignal gespeichert, das frei von Einflüssen der Kraftstoffeinspritzung ist.

Weiterhin werden einem Zylinder des Referenz-Verbrennungsmotors zuordenbaren dynamischen Druckschwingungen im Einlasstrakt zusätzlich bei saugsynchroner Kraftstoffeinspritzung und unter Variation von Einspritz-Startzeitpunkt und Einspritzmenge in Bezug auf das Kurbelwellen-Phasenwinkelsignal gemessen und daraus ein jeweils entsprechendes Referenz-Druckschwingungssignal erzeugt.

In weiterer Folge wird ein Referenz-Einspritz-Signalanteil aus dem jeweiligen Referenz-Druckschwingungssignal durch Subtraktion des Referenz-Basis-Druckschwingungsignals errechnet. Auf Basis des Referenz-Einspritz-Signalanteils wird eine jeweilige Referenz-Phasenlage und eine jeweilige Referenz-Amplitude des jeweiligen Referenz-Einspritz-Signalanteils ermittelt und die ermittelten Referenz-Phasenlagen werden in Abhängigkeit vom jeweiligen Einspritzbeginn-Zeitpunkt und die ermittelten Referenz-Amplituden werden in Abhängigkeit von der jeweiligen Einspritzmenge in Referenzwert-Kennfeldern gespeichert.

Diese Vorgehensweise hat den Vorteil, dass die unter Umständen sehr umfangreichen, kostenintensiven Messungen zur Ermittlung von Referenz-Basis-Drucksignal, Referenz-Phasenlagen und Referenz-Amplituden nur einmal an dem Referenz-Verbrennungsmotor durchgeführt werden müssen und dann für jeden baugleichen Serien-Verbrennungsmotor kostengünstig zur Verfügung stehen.

Die vorgenannte Vorgehensweise kann unter Variation bestimmter einflussnehmender Betriebsparameter, zum Beispiel an verschiedenen Betriebspunkten, wiederholt werden, um die Datenbasis zu verbreitern und die Einflüsse der weiteren Parameter mit einzubeziehen. Dies erleichtert die Durchführung des Verfahrens im Betrieb, da man dann bei der Durchführung des Verfahrens ggf. nicht auf die exakte Einhaltung bestimmter Parameter angewiesen ist.

Obwohl durch das erfindungsgemäße Verfahren unter Verwendung eines an einem Referenz-Verbrennungsmotor ermittelten Referenz-Basis-Druckschwingungssignals der jeweilige Einspritzbeginn-Zeitpunkt und die Einspritzmenge bereits mit guter Genauigkeit ermittelt werden können, hat sich bei Vergleichsmessungen an verschiedenen Serien-Verbrennungsmotoren herausgestellt, dass motorindividuelle, toleranzbedingte Abweichungen eines jeweils gemessenen Basis-Drucksignals zu dem am Referenz-Verbrennungsmotor ermittelten Referenz-Basis-Druckschwingungssignal bestehen, die die Qualität der Ermittlung von Einspritzbeginn-Zeitpunkt und Einspritzmenge negativ beeinflussen können.

In einer Ausführung des erfindungsgemäßen Verfahrens kann daher das Referenz-Basis-Drucksignal dem Normalbetrieb vorausgehend, alternativ zur vorgenannten Ermittlung an einem Referenz-Verbrennungsmotor, am jeweiligen Serien-Verbrennungsmotor ermittelt werden. Dies kann quasi als letzter Schritt der Produktion erfolgen durch Ermittlung eines Druckschwingungssignals in einem Messbetrieb des jeweiligen Serien-Verbrennungsmotors am Ende der Produktionslinie (End of Line). Dabei wird der Serien-Verbrennungsmotor an einem bestimmten Betriebspunkt, ohne Kraftstoffeinspritzung oder bei direkter Kraftstoffeinspritzung in den geschlossenen Brennraum, in Bezug auf das Kurbelwellen-Phasenwinkelsignal gemessen und daraus ein entsprechendes Druckschwingungssignal erzeugt, das als Referenz-Basis-Druckschwingungssignal gespeichert wird. In dem so ermittelten Referenz-Basis-Druckschwingungssignal sind motorindividuelle Abweichungen vom Referenz-Verbrennungsmotor enthalten und somit berücksichtigt, was eine noch genauere Ermittlung des Einspritz-Signalanteils und daraus resultierend auch eine genauere Ermittlung von Signal-Phasenlage und Einspritzbeginn-Zeitpunkt sowie Signal-Amplitude und Einspritzmenge ermöglicht.

Weiterhin vorteilhaft können zur Durchführung des erfindungsgemäßen Verfahrens die dynamischen Druckschwingungen im Ansaugtrakt mit Hilfe eines serienmäßigen Drucksensors im Saugrohr gemessen werden. Dies hat den Vorteil, dass kein zusätzlicher Drucksensor benötigt wird, was einen Kostenvorteil darstellt.

In einem weiteren Beispiel kann zur Durchführung des erfindungsgemäßen Verfahrens das Kurbelwellenpositions-Feedbacksignal mit einem Zähnerad und einem Hall-Sensor ermittelt werden, wobei es sich hierbei um eine gebräuchliche, ggf. ohnehin im Verbrennungsmotor vorhandene Sensoranordnung zur Erfassung der Kurbelwellenumdrehungen handelt. Das Zähnerad ist dabei beispielsweise am äußeren Umfang einer Schwungscheibe oder des Kurbelwellen-Steueradapters 10 (siehe auch Figur 1) angeordnet. Dies hat den Vorteil, dass keine zusätzliche Sensor-Anordnung benötigt wird, was einen Kostenvorteil darstellt.

Besonders vorteilhaft kann das erfindungsgemäße Verfahren durchgeführt werden, wenn die elektronische Recheneinheit, mit deren Hilfe das Verfahren durchgeführt und auf der das Referenz-Basis-Druckschwingungssignal, die Referenzwert-Kennfelder oder die Modellfunktion gespeichert sind, ein Motor-Steuergerät (CPU) zur Steuerung des Verbrennungsmotors ist und eine Anpassung der Steuergrößen oder Steuerroutinen zur Steuerung des Einspritzbeginn-Zeitpunktes und der Einspritzmenge des Kraftstoffes in Abhängigkeit von dem ermittelten Einspritzbeginn-Zeitpunktes und der ermittelten Einspritzmenge, durch das Motor-Steuergerät derart vorgenommen wird, dass eine Annäherung an vorgegebene Sollwerte für Einspritzbeginn-Zeitpunkt und Einspritzmenge des Kraftstoffes erfolgt.

Dies hat zum Einen den Vorteil, dass keine separate elektronische Recheneinheit erforderlich ist und so auch keine zusätzlichen, ggf. störungsanfälligen Schnittstellen zwischen mehreren Recheneinheiten bestehen. Zum Anderen kann das erfindungsgemäße Verfahren so zum integralen Bestandteil der Steuerungsroutinen des Verbrennungsmotors werden, wodurch eine schnelle Anpassung der Steuergrößen oder Steuerroutinen für den Verbrennungsmotor erfolgen kann.

Nochmal in Kürze zusammengefasst werden bei dem erfindungsgemäßen Verfahrens zur Ermittlung des Einspritzbeginn-Zeitpunktes und der Einspritzmenge des Kraftstoffes im Normalbetrieb eines Verbrennungsmotors einem Zylinder des Verbrennungsmotors zuordenbare dynamische Druckschwingungen im Einlasstrakt des betreffenden Verbrennungsmotors, an einem definierten Betriebspunkt bei saugsynchroner Kraftstoffeinspritzung, im Normalbetrieb gemessen und daraus ein Druckschwingungssignal mit Bezug auf ein gleichzeitig gemessenes Kurbelwellen-Phasenwinkelsignal ermittelt. Aus dem Druckschwingungssignal wird durch Abzug eines Referenz-Basis-Druckschwingungssignals der durch die Kraftstoffeinspritzung verursachte Einspritz-Signalanteil errechnet und dessen Signal-Phasenlage und dessen Signal-Amplitude in Bezug auf das Kurbelwellen-Phasenwinkelsignal ermittelt.

In weiterer Folge wird der Einspritzbeginn-Zeitpunkt auf Basis der ermittelten Signal-Phasenlage des Einspritz-Signalanteils unter Heranziehung von Referenz-Phasenlagen und die Einspritzmenge auf Basis der ermittelten Signal-Amplitude des Einspritz-Signalanteils unter Heranziehung von Referenz-Amplituden ermittelt.

## Patentansprüche

1. Verfahren zur Ermittlung des Einspritzbeginn-Zeitpunktes und der Einspritzmenge des Kraftstoffes im Normalbetrieb eines Verbrennungsmotors,
- wobei einem Zylinder des Verbrennungsmotors zuordenbare dynamische Druckschwingungen im Einlasstrakt des betreffenden Verbrennungsmotors, an einem definierten Betriebspunkt bei saugsynchroner Kraftstoffeinspritzung, im Normalbetrieb gemessen werden und daraus ein entsprechendes Druckschwingungssignal erzeugt wird und wobei gleichzeitig ein Kurbelwellen-Phasenwinkelsignal ermittelt wird,
- wobei ein Referenz-Basis-Druckschwingungssignal bereitgestellt ist, zu dessen Bereitstellung die einem Zylinder zuordenbaren dynamischen Druckschwingungen im Einlasstrakt ohne Kraftstoffeinspritzung oder bei direkter Kraftstoffeinspritzung in den geschlossenen Brennraum in Abhängigkeit vom Kurbelwellen-Phasenwinkel gemessen werden und daraus das Referenz-Basis-Druckschwingungssignal erzeugt und gespeichert wird, und
- wobei aus dem Druckschwingungssignal durch Abzug eines Referenz-Basis-Druckschwingungssignals der durch die Kraftstoffeinspritzung verursachte Einspritz-Signalanteil errechnet wird und
- wobei die Signal-Phasenlage und die Signal-Amplitude des Einspritz-Signalanteils in Bezug auf das Kurbelwellen-Phasenwinkelsignal ermittelt werden und
- wobei der Einspritzbeginn-Zeitpunkt auf Basis der ermittelten Signal-Phasenlage des Einspritz-Signalanteils unter Heranziehung von Referenz-Phasenlagen ermittelt wird und
- wobei die Einspritzmenge auf Basis der ermittelten Signal-Amplitude des Einspritz-Signalanteils unter Heranziehung von Referenz-Amplituden ermittelt wird.

2. Verfahren nach Anspruch 1, **dadurch gekennzeichnet, dass** das Referenz-Basis-Druckschwingungssignal in Abhängigkeit vom Kurbelwellen-Phasenwinkel, die Referenz-Phasenlagen in Abhängigkeit vom Einspritzbeginn-Zeitpunkt und die Referenz-Amplituden in Abhängigkeit von der Einspritzmenge in Referenzwert-Kennfeldern gespeichert bereitgestellt sind.

3. Verfahren nach Anspruch 1, **dadurch gekennzeichnet, dass** das Referenz-Basis-Druckschwingungssignal in Abhängigkeit vom Kurbelwellen-Phasenwinkel in einem Referenzwert-Kennfeld und entsprechende Modell-Funktionen, die den Zusammenhang zwischen Referenz-Phasenlagen und Einspritzbeginn-Zeitpunkt sowie Referenz-Amplituden und Einspritzmenge abbilden, gespeichert bereitgestellt sind.

4. Verfahren nach einem der Ansprüche 1 bis 3, **dadurch gekennzeichnet, dass** das Referenz-Basis-Druckschwingungssignal in Abhängigkeit vom Kurbelwellen-Phasenwinkel, die Referenz-Phasenlagen in Abhängigkeit vom Einspritzbeginn-Zeitpunkt und die Referenz-Amplituden in Abhängigkeit von der Einspritzmenge dem Normalbetrieb vorausgehend an einem Referenz-Verbrennungsmotor ermittelt wurden.

5. Verfahren nach den Ansprüchen 3 und 4, **dadurch gekennzeichnet, dass** die Modell-Funktionen, dem Normalbetrieb vorausgehend, aus den Referenz-Phasenlagen und den zugeordneten Einspritzbeginn-Zeitpunkten sowie aus den Referenz-Amplituden und den zugeordneten Einspritzmengen hergeleitet wurden und den Zusammenhang zwischen Referenz-Phasenlage und Einspritzbeginn-Zeitpunkt sowie Referenz-Amplitude und Einspritzmenge abbilden.

6. Verfahren nach einem der Ansprüche 1 bis 5, **dadurch gekennzeichnet, dass** zusätzlich zumindest einer der weiteren Betriebsparameter
- Temperatur des angesaugten Mediums im Ansaugtrakt,
- Temperatur eines zur Kühlung des Verbrennungsmotors verwendeten Kühlmittels,
- Motordrehzahl des Verbrennungsmotors,
bei der Ermittlung von Einspritzbeginn-Zeitpunkt und Einspritzmenge des Kraftstoffs herangezogen wird.

7. Verfahren nach einem der Ansprüche 2 oder 3, bis 6, **dadurch gekennzeichnet, dass** die Berechnung des durch die Kraftstoffeinspritzung verursachten Einspritz-Signalanteils sowie die Ermittlung der Signal-Phasenlage und der Signal-Amplitude des Einspritz-Signalanteils in Bezug auf das Kurbelwellen-Phasenwinkelsignal als auch die Ermittlung des Einspritzbeginn-Zeitpunktes und der Einspritzmenge des Kraftstoffes im Normalbetrieb eines Verbrennungsmotors mit Hilfe einer dem Verbrennungsmotor zugeordneten elektronischen Recheneinheit erfolgt,
wobei das Referenz-Basis-Druckschwingungssignals sowie die Referenzwert-Kennfelder oder die Modell-Funktionen, in zumindest einem Speicherbereich der elektronischen Recheneinheit gespeichert sind.

8. Verfahren nach einem der Ansprüche 4 bis 7, wobei die vorausgehende Ermittlung des Referenz-Basis-Druckschwingungssignals sowie der Referenz-Phasenlagen und Referenz-Amplituden des Einspritz-Signalanteils **gekennzeichnet ist durch** die Vermessung eines Referenz-Verbrennungsmotors in einem Messbetrieb, an zumindest einem definierten Betriebspunkt,
- wobei zur Ermittlung des Referenz-Basis-Druckschwingungssignals die einem Zylinder des Referenz-Verbrennungsmotors zuordenbaren dynamischen Druckschwingungen im Einlasstrakt, ohne Kraftstoffeinspritzung oder bei direkter Kraftstoffeinspritzung in einen geschlossenen Brennraum, in Bezug auf das Kurbelwellen-Phasenwinkelsignal gemessen und daraus ein entsprechendes Druckschwingungssignal erzeugt und als Referenz-Basis-Druckschwingungssignal gespeichert wird,
- wobei die einem Zylinder des Referenz-Verbrennungsmotors zuordenbaren dynamischen Druckschwingungen im Einlasstrakt zusätzlich bei saugsynchroner Kraftstoffeinspritzung und unter Variation von Einspritz-Startzeitpunkt und Einspritzmenge in Bezug auf das Kurbelwellen-Phasenwinkelsignal gemessen und daraus ein jeweils entsprechendes Referenz-Druckschwingungssignal erzeugt wird und
- wobei ein Referenz-Einspritz-Signalanteil aus dem jeweiligen Referenz-Druckschwingungssignal durch Subtraktion des Referenz-Basis-Druckschwingungssignals errechnet wird,
- wobei eine jeweilige Referenz-Phasenlage und eine jeweilige Referenz-Amplitude des jeweiligen Referenz-Einspritz-Signalanteils ermittelt werden und
- wobei die ermittelten Referenz-Phasenlagen in Abhängigkeit vom jeweiligen Einspritzbeginn-Zeitpunkt und die ermittelten Referenz-Amplituden in Abhängigkeit von der jeweiligen Einspritzmenge in Referenzwert-Kennfeldern gespeichert werden.

9. Verfahren nach einem der vorangehenden Ansprüche, **dadurch gekennzeichnet, dass** die dynamischen Druckschwingungen mit Hilfe eines serienmäßigen Drucksensors im Saugrohr gemessen werden.

10. Verfahren nach einem der vorausgehenden Ansprüche, **dadurch gekennzeichnet, dass** das Kurbelwellenpositions-Feedbacksignal mit einem Zähnerad und einem Hall-Sensor ermittelt wird.

11. Verfahren nach einem der Ansprüche 7 bis 10, **dadurch gekennzeichnet, dass** die elektronische Recheneinheit ein Motor-Steuergerät zur Steuerung des Verbrennungsmotors ist und eine Anpassung der Steuergrößen oder Steuerroutinen zur Steuerung des Einspritzbeginn-Zeitpunktes und der Einspritzmenge des Kraftstoffes in Abhängigkeit von dem ermittelten Einspritzbeginn-Zeitpunktes und der ermittelten Einspritzmenge, durch das Motor-Steuergerät derart vorgenommen wird, dass eine Annäherung an vorgegebene Sollwerte für Einspritzbeginn-Zeitpunkt und Einspritzmenge des Kraftstoffes erfolgt.

## Claims

1. Method for the determination of the injection beginning time and the injection quantity of the fuel in normal operation of an internal combustion engine,
- dynamic pressure oscillations which can be assigned to one cylinder of the internal combustion engine being measured in normal operation in the inlet section of the relevant internal combustion engine, at a defined operating point in the case of fuel injection in synchronism with induction, and a corresponding pressure oscillation signal being produced therefrom, and a crankshaft phase angle signal being determined at the same time,
- a reference base pressure oscillation signal being provided, for the provision of which the dynamic pressure oscillations which can be assigned to one cylinder are measured in the inlet section without fuel injection or in the case of direct fuel injection into the closed combustion chamber in a manner which is dependent on the crankcase phase angle, and the reference base pressure oscillation signal being generated therefrom and being stored, and
- the injection signal component which is caused by way of the fuel injection being calculated from the pressure oscillation signal by way of subtraction of a reference base pressure oscillation signal, and
- the signal phase position and the signal amplitude of the injection signal component being determined in relation to the crankshaft phase angle signal, and
- the injection beginning time being determined on the basis of the determined signal phase position of the injection signal proportion using reference phase positions, and
- the injection quantity being determined on the basis of the determined signal amplitude of the injection signal component using reference amplitudes.

2. Method according to Claim 1, **characterized in that** the reference base pressure oscillation signal is provided in a manner which is dependent on the crankshaft phase angle, the reference phase positions are provided in a manner which is dependent on the injection beginning time, and the reference amplitudes are provided in a manner which is dependent on the injection quantity, in a manner which is stored in reference value characteristic diagrams.

3. Method according to Claim 1, **characterized in that** the reference base pressure oscillation signal is provided in a stored manner in a manner which is dependent on the crankshaft phase angle in a reference value characteristic diagram and corresponding model functions which model the link between reference phase positions and the injection beginning time as well as reference amplitudes and the injection quantity.

4. Method according to one of Claims 1 to 3, **characterized in that**, using a reference internal combustion engine in a manner which precedes normal operation, the reference base pressure oscillation signal has been determined in a manner which is dependent on the crankshaft phase angle, the reference phase positions have been determined in a manner which is dependent on the injection beginning time, and the reference amplitudes have been determined in a manner which is dependent on the injection quantity.

5. Method according to Claims 3 and 4, **characterized in that**, preceding normal operation, the model functions have been derived from the reference phase positions and the associated injection beginning times and from the reference amplitudes and the associated injection quantities, and model the link between the reference phase position and the injection beginning time as well as the reference amplitude and the injection quantity.

6. Method according to one of Claims 1 to 5, **characterized in that**, in addition, at least one of the further operating parameters:
- temperature of the inducted medium in the intake section,
- temperature of the coolant which is used to cool the internal combustion engine,
- engine rotational speed of the internal combustion engine;
is used in the case of the determination of the injection beginning time and the injection quantity of the fuel.

7. Method according to one of Claims 2 or 3 to 6, **characterized in that** the calculation of the injection signal component which is caused by way of the fuel injection and the determination of the signal phase position and the signal amplitude of the injection signal proportion in relation to the crankshaft phase angle signal, and the determination of the injection beginning time and the injection quantity of the fuel in normal operation of an internal combustion engine take place with the aid of an electronic computing unit which is assigned to the internal combustion engine,
the reference base pressure oscillation signal and the reference value characteristic diagrams or the model functions being stored in at least one memory area of the electronic computing unit.

8. Method according to one of Claims 4 to 7, the preceding determination of the reference base pressure oscillation signal and the reference phase positions and reference amplitudes of the injection signal component being **characterized by** the measurement of a reference internal combustion engine in a measuring mode, at at least one defined operating point,
- the dynamic pressure oscillations which can be assigned to one cylinder of the reference internal combustion engine in the inlet section, without fuel injection or in the case of direct fuel injection into a closed combustion chamber, being measured in relation to the crankshaft phase angle signal for the determination of the reference base pressure oscillation signal, and a corresponding pressure oscillation signal being produced therefrom and being stored as a reference base pressure oscillation signal,
- the dynamic pressure oscillations which can be assigned to one cylinder of the reference internal combustion engine in the inlet section being additionally measured in the case of fuel injection in synchronism with induction and with a variation of the injection start time and the injection quantity in relation to the crankshaft phase angle signal, and a respective corresponding reference pressure oscillation signal being produced therefrom, and
- a respective reference phase position and a respective reference amplitude of the respective reference injection signal component being determined, and
- the determined reference phase positions being stored in reference characteristic diagrams in a manner which is dependent on the respective injection beginning time, and the determined reference amplitudes being stored in reference value characteristic diagrams in a manner which is dependent on the respective injection quantity.

9. Method according to one of the preceding claims, **characterized in that** the dynamic pressure oscillations are measured with the aid of a standard pressure sensor in the intake manifold.

10. Method according to one of the preceding claims, **characterized in that** the crankshaft position feedback signal is determined by way of a toothed wheel and a Hall sensor.

11. Method according to one of Claims 7 to 10, **characterized in that** the electronic computing unit is an engine control unit for controlling the internal combustion engine, and an adaptation of the control variables or control routines for controlling the injection beginning time and the injection quantity of the fuel is performed by way of the engine control unit in a manner which is dependent on the determined injection beginning time and the determined injection quantity, in such a way that an approximation to predefined set values for the injection beginning time and the injection quantity of the fuel takes place.

## Revendications

1. Procédé pour déterminer l'instant de début d'injection et le volume d'injection du carburant en fonctionnement normal d'un moteur à combustion interne,
- des oscillations de pression dynamiques pouvant être associées à un cylindre du moteur à combustion interne dans le conduit d'admission du moteur à combustion interne concerné étant mesurées à un point de fonctionnement défini lors de l'injection de carburant synchrone avec l'aspiration, en fonctionnement normal, et un signal d'oscillation de pression correspondant étant généré à partir de celles-ci et un signal d'angle de phase de vilebrequin étant déterminé simultanément,
- un signal d'oscillation de pression de base de référence étant fourni, les oscillations de pression dynamiques pouvant être associées à un cylindre étant mesurées en vue de sa fourniture dans le conduit d'admission sans injection de carburant ou avec injection de carburant directe dans la chambre de combustion fermée en fonction de l'angle de phase de vilebrequin et un signal d'oscillation de pression de base de référence étant généré à partir de celles-ci et mémorisé, et
- la part de signal d'injection causée par l'injection de carburant étant calculée à partir du signal d'oscillation de pression par déduction du signal d'oscillation de pression de base de référence et
- la position de phase de signal et l'amplitude de signal de la part de signal d'injection étant déterminées en référence au signal d'angle de phase de vilebrequin et
- l'instant de début d'injection étant déterminé sur la base de la position de phase de signal de la part de signal d'injection en utilisant des positions de phase de référence et
- le volume d'injection étant déterminé sur la base de l'amplitude de signal déterminée de la part de signal d'injection en utilisant des amplitudes de référence.

2. Procédé selon la revendication 1, **caractérisé en ce que** des diagrammes caractéristiques de valeurs de référence fournissent et mémorisent le signal d'oscillation de pression de base de référence en fonction d'un angle de phase de vilebrequin, les positions de phase de référence en fonction de l'instant de début d'injection et les amplitudes de référence en fonction du volume d'injection.

3. Procédé selon la revendication 1, **caractérisé en ce qu'**un diagramme caractéristique de valeurs de référence ainsi que des fonctions de modèle correspondantes, qui représentent la relation entre les positions de phase de référence et l'instant de début d'injection ainsi que les amplitudes de référence et le volume d'injection, fournissent et mémorisent le signal d'oscillation de pression de base de référence en fonction de l'angle de phase de vilebrequin.

4. Procédé selon l'une des revendications 1 à 3, **caractérisé en ce que** le signal d'oscillation de pression de base de référence en fonction de l'angle de phase de vilebrequin, les positions de phase de référence en fonction de l'instant de début d'injection et les amplitudes de référence en fonction du volume d'injection ont été déterminés sur un moteur à combustion interne de référence préalablement au fonctionnement normal.

5. Procédé selon l'une des revendications 3 et 4, **caractérisé en ce que** les fonctions de modèle ont été dérivées préalablement au fonctionnement normal à partir des positions de phase de référence et des instants de début d'injection associés ainsi qu'à partir des amplitudes de référence et des volumes d'injection associés et représentent la relation entre la position de phase de référence et l'instant de début d'injection ainsi que l'amplitude de référence et le volume d'injection.

6. Procédé selon l'une des revendications 1 à 5, **caractérisé en ce qu'**au moins l'un des paramètres opérationnels supplémentaires
- température du fluide aspiré dans le conduit d'aspiration,
- température d'un fluide de refroidissement utilisé pour refroidir le moteur à combustion interne,
- vitesse de rotation de moteur du moteur à combustion interne
est en plus utilisé lors de la détermination de l'instant de début d'injection et du volume d'injection du carburant.

7. Procédé selon l'une des revendications 2 et 3, à 6, **caractérisé en ce qu'**une unité de calcul électronique associée au moteur à combustion interne sert à effectuer le calcul de la part de signal d'injection causée par l'injection de carburant ainsi que la détermination de la position de phase de signal et de l'amplitude de signal de la part de signal d'injection s'effectue en référence au signal d'angle de phase de vilebrequin et aussi la détermination de l'instant de début d'injection et du volume d'injection du carburant en fonctionnement normal d'un moteur à combustion interne,
le signal d'oscillation de pression de base de référence ainsi que les diagrammes caractéristiques de référence ou les fonctions de modèle étant mémorisés dans au moins une zone de mémoire de l'unité de calcul électronique.

8. Procédé selon l'une des revendications 4 à 7, la détermination préalable du signal d'oscillation de pression de base de référence ainsi que des positions de phase de référence et des amplitudes de référence de la part de signal d'injection étant **caractérisée par** la mesure d'un moteur à combustion interne de référence dans un régime de mesure à au moins un point de fonctionnement défini,
- la détermination du signal d'oscillation de pression de base de référence s'effectuant en mesurant les oscillations de pression dynamiques dans le conduit d'admission pouvant être associées à un cylindre du moteur à combustion interne de référence, sans injection de carburant ou lors d'une injection de carburant directe dans une chambre de combustion fermée, en référence au signal d'angle de phase de vilebrequin, et un signal d'oscillation de pression correspondant étant généré à partir de celles-ci et mémorisé en tant que signal d'oscillation de pression de base de référence,
- les oscillations de pression dynamiques dans le conduit d'admission pouvant être associées à un cylindre du moteur à combustion interne de référence étant en plus mesurées lors de l'injection de carburant synchrone avec l'aspiration et en faisant varier l'instant de début d'injection et le volume d'injection en référence au signal d'angle de phase de vilebrequin, et un signal d'oscillation de pression de référence respectivement correspondant étant généré à partir de celles-ci et
- une part de signal d'injection de référence étant calculée à partir du signal d'oscillation de pression de référence respectif par soustraction du signal d'oscillation de pression de base de référence,
- une position de phase de référence respective et l'amplitude de référence respective de la part de signal d'injection respective étant déterminées et
- des diagrammes caractéristiques de référence mémorisant les positions de phase de référence déterminées en fonction de l'instant de début d'injection respectif et les amplitudes de référence déterminées en fonction du volume d'injection respectif.

9. Procédé selon l'une des revendications précédentes, **caractérisé en ce que** les oscillations de pression dynamiques sont mesurées à l'aide d'un capteur de pression de série dans le tube d'aspiration.

10. Procédé selon l'une des revendications précédentes, **caractérisé en ce que** le signal de rétroaction de position de vilebrequin est déterminé avec une roue dentée et un capteur à effet Hall.

11. Procédé selon l'une des revendications 7 à 10, **caractérisé en ce que** l'unité de calcul électronique est un contrôleur de moteur destiné à commander le moteur à combustion interne et une adaptation des grandeurs de commande ou des routines de commande en vue de commander l'instant de début d'injection et le volume d'injection du carburant en fonction de l'instant de début d'injection déterminé et du volume d'injection déterminé est effectuée par le contrôleur de moteur de telle sorte qu'il se produit un rapprochement à des valeurs de consigne prédéfinie pour l'instant de début d'injection et le volume d'injection du carburant.
